# FASCICULE DE BREVET EUROPEEN

(11) **EP 1 311 371 B1**
(45) Date de publication et mention de la délivrance du brevet: **04.10.2006**
(21) Numéro de dépôt: 01965352.6
(22) Date de dépôt: 24.08.2001
(51) Int. Cl.: B25B 5/10, F16B 2/06, G02F 1/13

(54) **SYSTEME DE MAINTIEN MECANIQUE POUR DISPOSITIF A ELEMENT SENSIBLEMENT PLAT, NOTAMMENT POUR DISPOSITIF DE VISUALISATION A ECRAN A CRISTAUX LIQUIDES**
HALTEVORRICHTUNG FÜR FLÄCHIGES ELEMENT, INSBESONDERE FÜR EINEN FLÜSSIGKRISTALLANZEIGESCHIRM
MECHANICAL MAINTAINING SYSTEM FOR A DEVICE WITH A SUBSTANTIALLY FLAT ELEMENT, IN PARTICULAR FOR LIQUID CRYSTAL DISPLAY DEVICE

(30) Priorité: 25.08.2000 FR 0010963
(43) Date de publication de la demande: 21.05.2003
(73) Titulaire: Thales, 92200 Neuilly Sur Seine (FR)
(72) Inventeur: ALRIC, Stéphane, Thales Intellectual Property, F-94117 Arcueil Cedex (FR); KLAVER, Jean-Noel, Thales Intellectual Property, F-94117 Arcueil Cedex (FR); BIBES, Xavier, Thales Intellectual Property, F-94117 Arcueil Cedex (FR)
(74) Mandataire: Esselin, Sophie
(86) Numéro de dépôt international: PCT/FR2001/002668
(87) Numéro de publication internationale: WO 2002/016083

(56) Documents cités:
- US-A- 5 131 780
- US-A- 6 166 788
- PATENT ABSTRACTS OF JAPAN vol. 1997, no. 02, 28 février 1997 (1997-02-28) & JP 08 281561 A (SEIKOSHA CO LTD), 29 octobre 1996 (1996-10-29)
- PATENT ABSTRACTS OF JAPAN vol. 013, no. 520 (P-963), 21 novembre 1989 (1989-11-21) & JP 01 211721 A (SANYO ELECTRIC CO LTD), 24 août 1989 (1989-08-24)
- PATENT ABSTRACTS OF JAPAN vol. 018, no. 439 (P-1787), 16 août 1994 (1994-08-16) & JP 06 138443 A (HITACHI LTD;OTHERS: 01), 20 mai 1994 (1994-05-20)

## Description

L'invention concerne le domaine des systèmes de maintien mécanique pour dispositifs à élément sensiblement plat, notamment pour dispositifs de visualisation à écran à cristaux liquides. Le dispositif comporte un ou plusieurs éléments sensiblement plats. Un élément sensiblement plat est un élément dont l'une des dimensions appelée l'épaisseur est inférieure à la moitié de chacune des deux autres dimensions formant ensemble le plan moyen de l'élément. L'élément plat doit être mécaniquement maintenu entre deux parties du cadre du dispositif à l'aide d'un système de maintien mécanique préférentiellement démontable.

Selon un art antérieur connu dans le domaine des dispositifs de visualisation à écran à cristaux liquides, il est prévu un cadre comprenant deux parties destinées à pincer l'élément sensiblement plat par l'intermédiaire de deux joints élastiques. Les deux parties du cadre sont mises en butée l'une contre l'autre par l'intermédiaire d'une surface de contact parallèle au plan moyen de l'élément sensiblement plat. Les deux parties du cadre sont maintenues l'une par rapport à l'autre par un dispositif de serrage dont l'axe est orthogonal au plan moyen de l'élément sensiblement plat. Entre l'élément sensiblement plat et chacune des parties du cadre destinée à pincer l'élément sensiblement plat, se trouve un joint de section carrée de manière à absorber les tolérances selon la direction de l'épaisseur de l'élément sensiblement plat. Un tel dispositif est connu du document JP 11 202 789.

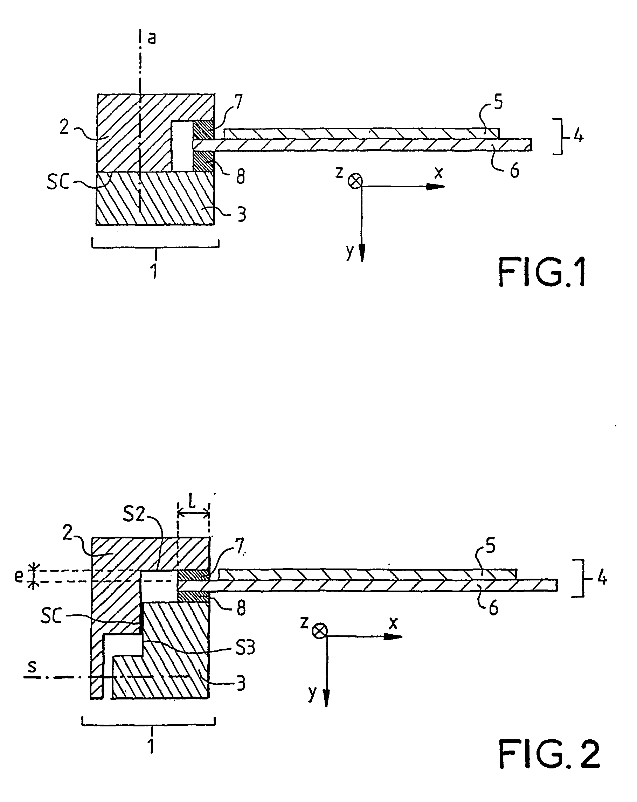

La figure 1 donne un exemple d'un tel dispositif selon l'art antérieur. La figure 1 représente schématiquement une vue en coupe d'un dispositif à élément sensiblement plat maintenu mécaniquement par un système selon l'art antérieur. L'élément sensiblement plat 4 est un écran à cristaux liquides. L'écran 4 comprend une plaque supérieure 5 et une plaque inférieure 6 entre lesquels sont disposés les cristaux liquides. La plaque inférieure 6 est généralement appelée TFT tandis que la plaque supérieure 5 est généralement appelée contre-électrode La zone utile de l'écran 4 correspond à la surface de la plaque supérieure 5. La plaque inférieure 6, plus grande que la plaque supérieure 5, est maintenue entre les deux parties du cadre 1, respectivement entre la partie supérieure 2 et la partie inférieure 3, par l'intermédiaire de deux joints, respectivement le joint supérieur 7 et le joint inférieur 8. Le plan moyen de l'écran 1 est le plan XZ tandis que la direction de l'épaisseur de l'écran 1, c'est-à-dire la direction orthogonale au plan moyen XZ de l'écran 1 est l'axe Y. Les deux parties supérieure 2 et inférieure 3 du cadre 1 sont mises en butée l'une contre l'autre par l'intermédiaire de la surface de contact SC. L'axe a de serrage des deux parties 2 et 3 du cadre entre elles est représenté en traits mixtes.

Un inconvénient de cet art antérieur est la difficulté pour le système de maintien mécanique de maintenir l'élément sensiblement plat fermement tout en restant capable d'absorber des tolérances quelques fois importantes. En effet, l'effort de maintien exercé par les parties du cadre sur l'élément sensiblement plat par l'intermédiaire des joints n'est pas maîtrisé, cet effort dépend de la tolérance des côtes situées entre les deux parties du cadre le long d'une direction orthogonale au plan moyen de l'élément sensiblement plat. Ainsi, si le pincement des parties du cadre est suffisamment fort pour maintenir fermement l'élément sensiblement plat dans le cas où les côtes seraient minimum, dans le cas où les côtes seraient maximum le pincement risque d'être trop fort soit pour ne pas endommager l'élément sensiblement plat ou pour ne pas perturber son fonctionnement, lorsque l'élément sensiblement plat est fragile, ce qui est le cas préférentiel d'un écran à cristaux liquides dont l'image affichée peut être dégradée en présentant par exemple des zones blanches, soit pour ne pas endommager le ou les joints situés entre l'élément sensiblement plat et le cadre ; et vice-versa. Un élément sensiblement plat trop mollement maintenu risque d'être détérioré, comme par exemple un écran à cristaux liquides soumis à des vibrations de niveau élevé risque de voir ses connexions électriques au reste du dispositif être cisaillées par les vibrations. Les vibrations gênantes sont surtout les vibrations transverses, c'est-à-dire les vibrations dans le plan moyen de l'élément sensiblement plat, plus que les vibrations orthogonales au plan moyen de l'élément sensiblement plat. Pour qu'un joint élastique remplisse correctement sa fonction, il ne doit ni être trop comprimé ni être trop peu comprimé.

L'invention propose une solution dans laquelle l'effort de maintien de l'élément sensiblement plat par les parties du cadre par l'intermédiaire d'au moins un joint élastique, est maîtrisé. Ainsi, le compromis réalisé entre d'une part le maintien suffisamment ferme de l'élément sensiblement plat dans le cas où les côtes situées entre les deux parties du cadre le long d'une direction orthogonale au plan moyen de l'élément sensiblement plat seraient minimum et d'autre part l'évitement d'un écrasement trop important soit du joint soit de l'élément sensiblement plat dans le cas où les côtes situées entre les deux parties du cadre selon une direction orthogonale au plan moyen de l'élément sensiblement plat seraient maximum, est bien meilleur.

Selon l'invention, il est prévu un dispositif tel que défini par les caractéristiques de la revendication 1.

L'invention sera mieux comprise et d'autres particularités et avantages apparaîtront à l'aide de la description ci-après et des dessins joints, donnés à titre d'exemples, où :
- la figure 1 représente schématiquement une vue en coupe d'un dispositif à élément sensiblement plat maintenu mécaniquement par un système selon l'art antérieur ;
- la figure 2 représente schématiquement une vue en coupe d'un mode de réalisation préférentiel d'un dispositif à élément sensiblement plat maintenu mécaniquement par un système selon l'invention ;
- la figure 3 représente schématiquement une vue de côté d'un détail avantageux d'un dispositif à élément sensiblement plat maintenu mécaniquement par un système selon l'invention ;
- la figure 4 représente schématiquement une vue en coupe d'un autre détail avantageux d'un dispositif à élément sensiblement plat maintenu mécaniquement par un système selon l'invention.

Le dispositif comporte un élément sensiblement plat qui va devoir être maintenu fermement entre les deux parties d'un cadre sans toutefois être écrasé. Dans toute la suite du texte, lorsqu'on parlera des parties du cadre sans autre précision, il s'agira, sauf mention contraire, des parties du cadre qui sont destinées à pincer l'élément sensiblement plat. Dans toute la suite du texte, on parlera de l'élément sensiblement plat ou de l'écran à cristaux liquides, mais il n'est pas exclu que le dispositif selon l'invention en comprenne plusieurs, les différents éléments sensiblement plats pouvant être maintenus par un seul ou plusieurs jeux de parties de cadre différents. Le dispositif comporte aussi un cadre destiné à recevoir l'élément sensiblement plat, le cadre comportant deux parties destinées à pincer, entre elles, selon une direction sensiblement orthogonale au plan moyen de l'élément sensiblement plat, par l'intermédiaire d'au moins un joint élastique, une portion de l'élément sensiblement plat. Le cadre comporte au moins deux parties dont la fonction est de pouvoir pincer entre elles l'élément sensiblement plat, le cadre pouvant comporter plusieurs autres parties. Le pincement est réalisé selon une direction sensiblement orthogonale au plan moyen de l'élément sensiblement plat, comme dans l'art antérieur, l'idéal étant une direction orthogonale car moins la direction est orthogonale et plus le ou les joints élastiques vont subir des efforts latéraux et donc être latéralement déformés, ce qui est mauvais pour l'ensemble du dispositif et risque de l'endommager ou de perturber son fonctionnement. Le pincement est réalisé par l'intermédiaire d'au moins un joint élastique disposé entre l'élément sensiblement plat et l'une des parties du cadre, un film plastifié étant par exemple déposé entre l'élément sensiblement plat et l'autre partie du cadre, ou bien par l'intermédiaire de deux joints élastiques, chaque interface entre l'élément sensiblement plat et le cadre étant occupée par un joint élastique. Un joint élastique est un joint pouvant être comprimé par un effort. Une portion de l'élément sensiblement plat est pincée, c'est préférentiellement sa périphérie. Pour faire le tour de la périphérie de l'élément sensiblement plat, le ou les joints élastiques sont soit d'un seul tenant, soit en plusieurs tronçons selon les contraintes de réalisation imposées par le type d'élément sensiblement plat envisagé. Le dispositif comporte également un système de maintien mécanique de la position relative des parties du cadre l'une par rapport à l'autre de manière à pouvoir maintenir le pincement de l'élément sensiblement plat.

Alors que dans l'art antérieur les parties du cadre et le système de maintien mécanique étaient structurés et disposés de manière à ce que les parties du cadre viennent en butée l'une contre l'autre, cette position de butée étant la seule position relative des parties du cadre l'une par rapport à l'autre selon une direction sensiblement orthogonale au plan moyen de l'élément sensiblement plat, dans l'invention les parties du cadre et le système de maintien mécanique sont structurés et disposés de manière à pouvoir maintenir, selon une direction sensiblement orthogonale au plan moyen de l'élément sensiblement plat, plusieurs positions relatives des parties du cadre l'une par rapport à l'autre. Grâce à ces différentes positions relatives des parties du cadre l'une par rapport à l'autre, le système de maintien mécanique peut s'adapter à différentes côtes situées entre les deux parties du cadre le long d'une direction orthogonale au plan moyen de l'élément sensiblement plat, des côtes minimum aux côtes maximum, même si la tolérance est importante, tout en réalisant un bon compromis entre le maintien suffisamment ferme de l'élément sensiblement plat et l'évitement d'un écrasement trop important soit du joint soit de l'élément sensiblement plat. Pour que ce compromis soit réalisé, il suffit d'appliquer entre les parties du cadre, lors du montage, un effort nominal adéquat selon une direction orthogonale au plan moyen de l'élément sensiblement plat, jusqu'à ce que cet effort soit équilibré par la compression du ou des joints élastiques, c'est-à-dire par le contre-effort fourni par le ou les joints comprimés. Les différentes positions, à condition d'être suffisamment resserrées entre elles et de couvrir un intervalle suffisamment important, permettent à l'effort réellement appliqué d'être très proche de l'effort nominal souhaité, aussi proche que voulu car il suffit pour cela de réduire la distance entre deux positions contiguës, même en cas de tolérance importante au niveau des côtes entre les parties du cadre. Les différentes positions relatives couvrent de préférence au moins un intervalle continu de manière à ce que l'effort réellement appliqué puisse être sensiblement égal à l'effort nominal souhaité. Le réglage du pincement adéquat de l'élément sensiblement plat qui dans l'art antérieur dépendait d'un ensemble d'une ou plusieurs côtes mécaniques coûteux à maîtriser, dépend dans l'invention de l'application d'un effort beaucoup plus facile à maîtriser.

Le dispositif est de préférence un dispositif de visualisation et l'élément sensiblement plat est de préférence une cellule d'affichage sensiblement plate. La cellule d'affichage sensiblement plate est avantageusement un écran à cristaux liquides. Dans un exemple numérique préférentiel de l'invention, entre les deux parties du cadre destinées à pincer l'écran à cristaux liquides, la chaîne de côtes vaut environ 2,7mm ± 0,5mm, soit une différence entre chaîne de côtes minimum et chaîne de côtes maximum valant environ 1 mm. Or, un ou deux joints d'une épaisseur totale de 1,6mm devraient être comprimés entre 10% et 30% de leur épaisseur pour remplir leur rôle de manière optimale, ce qui correspond à une variation valant au maximum 20% de 1,6mm, c'est-à-dire environ 0,3mm ce qui est une valeur largement inférieure au 1 mm que vaut l'écart entre chaîne de côtes minimum et maximum, et ce qui illustre à titre d'exemple l'intérêt de l'invention.

Dans un mode de réalisation préférentiel, afin d'autoriser plusieurs positions relatives des parties du cadre l'une par rapport à l'autre, les parties du cadre destinées à pincer l'élément sensiblement plat, présentent entre elles, en position maintenue, au moins une surface de contact sensiblement orthogonale au plan moyen de l'élément sensiblement plat. De manière optimale, la surface de contact est exactement orthogonale au plan moyen de l'élément sensiblement plat, car le seul effort exercé sur le ou les joints élastiques est un effort exactement orthogonal au plan moyen de l'élément sensiblement plat, tandis qu'au fur et à mesure que la surface de contact est de moins en moins orthogonale au plan moyen de l'élément sensiblement plat, une composante d'effort tangentielle au plan moyen de l'élément sensiblement plat tend de plus en plus à s'exercer sur le ou les joints élastiques risquant de plus en plus de les détériorer. La proportion d'effort tangentiel admissible par le ou les joints élastiques utilisés avant que ceux-ci ne soient substantiellement dégradés dépend du type de joint élastique utilisé, et par conséquent du type d'élément sensiblement plat considéré. Pour permettre aux différentes positions relatives précitées d'être toutes effectivement atteintes, les parties du cadre ne présentent préférentiellement pas de surface de contact parallèle à l'intérieur de l'intervalle des positions relatives précitées, lorsque leur mouvement relatif leur fait parcourir ledit intervalle, car sinon une partie dudit intervalle ne pourrait pas être utilisée. D'autres modes de réalisation sont possibles, par exemple un rail commun dont la direction est sensiblement orthogonale au plan moyen de l'élément sensiblement plat, et sur lequel rail commun, les deux parties du cadre peuvent se déplacer pour venir pincer l'élément sensiblement plat.

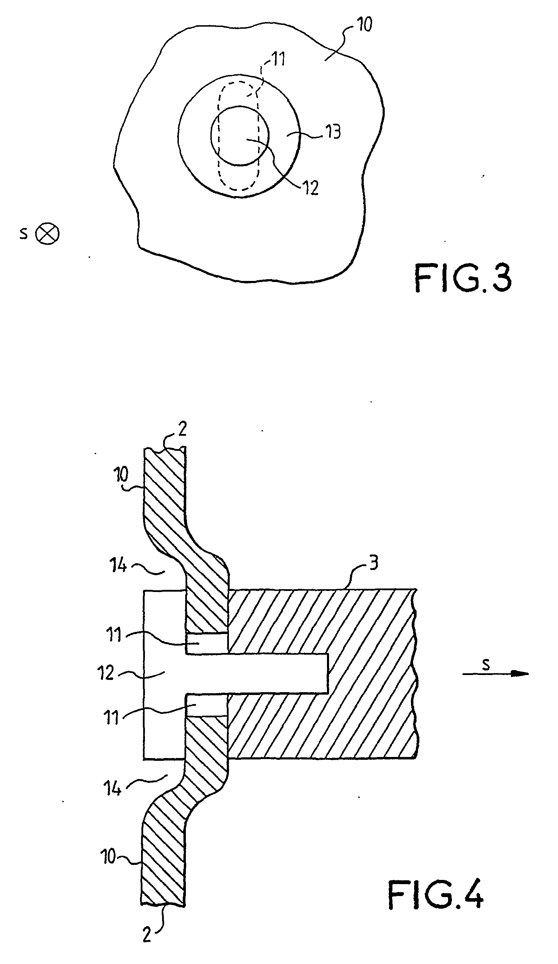

La figure 2 représente schématiquement une vue en coupe d'un mode de réalisation préférentiel d'un dispositif à élément sensiblement plat maintenu mécaniquement par un système selon l'invention. Comme sur la figure 1, sur la figure 2 seuls sont représentées le cadre et les joints du côté gauche de l'écran 4, étant entendu que le cadre et les joints peuvent venir pincer également le côté droit de l'écran 4, ou même par exemple venir pincer toute la périphérie de l'écran 4. L'élément sensiblement plat représenté correspond à un écran 4 à cristaux liquides comprenant une plaque supérieure 5 et une plaque inférieure 6. La zone utile de l'écran 4 correspond à la surface de la plaque supérieure 5. L'écran 4 est pincé par les parties supérieure 2 et inférieure 3 du cadre 1 par l'intermédiaire des joints élastiques supérieur 7 et inférieur 8. Les joints 7 et 8 ont de préférence une section rectangulaire. La joints 7 et 8 ont une largeur 1 et une épaisseur e qui sont respectivement la longueur et la largeur de la section rectangulaire. Entre la partie supérieure 2 du cadre 1 et l'écran 4 (ou plus précisément la plaque inférieure 3 de l'écran 4), se trouve le joint élastique supérieur 7. Entre la partie inférieure 3 du cadre 1 et l'écran 4 (ou plus précisément la plaque inférieure 3 de l'écran 4), se trouve le joint élastique inférieur 8. Les parties supérieure 2 et inférieure 3 du cadre 1 présentent une surface de contact SC qui est parallèle à l'axe Y, c'est-à-dire qui est sensiblement orthogonale au plan moyen de l'écran 4 qui est parallèle au plan XZ. Il n'existe aucune surface de contact entre les deux parties supérieure 2 et inférieure 3 du cadre 1 qui soit parallèle au plan moyen de l'écran 4. Les parties supérieure 2 et inférieure 3 du cadre sont maintenues en position l'une par rapport à l'autre par un dispositif de serrage ultérieurement décrit en liaison avec les figures 3 et 4 et dont l'axe de serrage s est orthogonal à l'axe de compression des joints élastiques supérieur 7 et inférieur 8, ledit axe de compression étant parallèle à l'axe Y. L'axe de serrage s est représenté en traits mixtes. Les partie supérieure 2 du cadre 1 présente une surface S2 en regard de la partie inférieure 3 du cadre 1, tandis que la partie inférieure 3 du cadre 1 présente une surface S3 en regard de la partie supérieure 2 du cadre 1. Les surfaces S2 et S3 ont toutes deux avantageusement un profil en escalier. La surface de contact SC est la surface de contact commune entre les surfaces S2 et S3.

Le système de maintien mécanique est préférentiellement un dispositif de serrage comprenant au moins une vis coulissant dans un trou oblong. Ce dispositif de serrage comporte avantageusement une rondelle disposée entre la vis et le trou oblong, la rondelle étant suffisamment grande pour augmenter la surface d'appui de la vis sur le trou oblong. Ce trou oblong est de préférence situé dans un renfoncement qui est situé dans une surface extérieure du cadre et qui est disposé vers l'intérieur du dispositif. Ainsi, le dispositif de serrage prend moins de place et le ratio entre la zone utile de l'élément sensiblement plat et la surface totale de l'élément sensiblement plat est augmenté. D'autres systèmes de maintien peuvent être utilisés pour maintenir la position relative des deux parties de cadre entre elles.

La figure 3 représente schématiquement une vue de côté d'un détail avantageux concernant le dispositif de serrage des parties du cadre d'un dispositif à élément sensiblement plat maintenu mécaniquement par un système selon l'invention. La surface extérieure 10 du cadre 1, plus précisément la surface extérieure 10 de la partie supérieure 2 du cadre 1 comporte un trou oblong 11 au travers duquel passe une vis 12 de serrage qui vient se visser dans la partie inférieure 3 du cadre 1. Les rôles des parties supérieure 2 et inférieure 3 du cadre 1 pourraient aussi être inversés. Le trou oblong 11 permet le maintien de plusieurs positions relatives différents de la partie supérieure 2 du cadre 1 par rapport à la partie inférieure 3 du cadre 1. Pour augmenter la surface d'appui de la vis 12 de serrage sur le trou oblong 11, une rondelle 13 de taille suffisante est disposée entre la vis 12 de serrage et le trou oblong 11. L'axe de serrage s est orthogonal au plan de la figure 3.

La figure 4 représente schématiquement une vue en coupe d'un autre détail avantageux concernant le dispositif de serrage des parties du cadre d'un dispositif à élément sensiblement plat maintenu mécaniquement par un système selon l'invention. L'axe de serrage s de la vis 12 de serrage est représenté. La surface extérieure 10 de la partie supérieure 2 du cadre 1 comporte un renfoncement 14 disposé vers l'intérieur du dispositif, c'est-à-dire vers l'élément sensiblement plat, c'est-à-dire ici sur la figure 4 vers la partie inférieure 3 du cadre 1. Le dispositif de serrage est représenté sans rondelle sur la figure 4.

Les joints élastiques à section carré des dispositifs selon l'art antérieur permettent d'absorber d'importantes variations de tolérance mais ont l'inconvénient de permettre des déplacements importants de l'élément sensiblement plat dans son plan moyen. Or, les problèmes de variations importantes de tolérance étant réglés par les différentes positions relatives des parties du cadre l'une par rapport à l'autre, selon une direction sensiblement orthogonale au plan moyen de l'élément, qui sont autorisées dans un dispositif selon l'invention. Afin de limiter les déplacements de l'élément sensiblement plat dans son plan moyen, le ou les joints élastiques utilisés dans un dispositif selon l'invention sont préférentiellement des joints plats. Un joint plat est un joint dont la largeur vaut au moins le double de son épaisseur. Un joint plat est plus stable qu'un joint carré, c'est-à-dire qu'un joint à section carré. La largeur du joint plat utilisé vaut avantageusement sensiblement le triple de l'épaisseur dudit joint plat. Dans un exemple numérique préférentiel, la largeur du joint plat vaut environ 2,5mm tandis que son épaisseur vaut environ 0,8mm. Chaque joint élastique est avantageusement en silicone.

Dans un mode de réalisation préférentiel au moins un joint se trouve entre l'élément sensiblement plat et chaque partie du cadre, comme sur la figure 2 par exemple. Par exemple, lorsque les joints sont placés au niveau de la périphérie de l'élément sensiblement plat, de chaque côté de l'élément sensiblement plat, il peut s'agir soit d'un joint unique faisant le tour de l'élément sensiblement plat dans le plan moyen de l'élément sensiblement plat ou bien de plusieurs tronçons de joint c'est-à-dire en fait de plusieurs joints disposés le long de la périphérie de l'élément sensiblement plat. Dans un autre mode de réalisation, entre l'élément sensiblement plat et l'une des parties du cadre se trouve au moins un joint, tandis qu'entre l'élément sensiblement plat et l'autre partie du cadre se trouve un film plastique avantageusement autocollant. De préférence la première partie est la partie supérieure 2 tandis que la deuxième partie est la partie inférieure 3, ceci afin d'assurer une meilleure étanchéité de l'intérieur du dispositif qui est situé sous l'élément sensiblement plat 4 sur la figure 2.

Lors du montage d'un dispositif selon l'invention, le procédé de montage comporte préférentiellement une étape de pincement de l'élément par compression du ou des joints par l'intermédiaire de l'application d'un effort nominal jusqu'à ce que l'effort nominal soit équilibré par le contre-effort fourni par le ou les joints comprimés. Ainsi, l'effort de maintien exercé par les parties du cadre sur l'élément sensiblement plat par l'intermédiaire des joints est complètement maîtrisé. Le mouvement relatif des parties du cadre l'une par rapport à l'autre s'effectue de préférence par coulissement le long d'une surface de contact entre les parties du cadre, la surface de contact étant sensiblement orthogonale au plan moyen de l'élément sensiblement plat, afin de ne pas solliciter le ou les joints par des efforts transversaux, c'est-à-dire par des efforts dans des directions appartenant au plan moyen de l'élément sensiblement plat. Lors de l'application de l'effort nominal, les parties du cadre qui se rapprochent ne viennent pas buter l'une contre l'autre selon une surface de contact parallèle au plan moyen de l'élément sensiblement plat, ceci afin de pouvoir utiliser la totalité de l'intervalle prévu pour les différentes positions relatives entre les parties du cadre.

L'invention peut être avantageusement appliquée dans les consoles d'aéronef. Une console d'aéronef utilise un ou plusieurs dispositifs de visualisation comportant un ou plusieurs écrans à cristaux liquides.

## Revendications

1. Dispositif comportant au moins :
- un élément (4) sensiblement plat ;
- un cadre (1) destiné à recevoir l'élément (4), le cadre (1) comportant deux parties (2, 3) destinées à pincer, entre elles, selon une direction (Y) sensiblement orthogonale au plan moyen (XZ) de l'élément (4), par l'intermédiaire d'au moins un joint (7, 8) élastique, une portion de l'élément (4) ;
- un système de maintien mécanique (11, 12) de la position relative des parties (2, 3) du cadre (1) l'une par rapport à l'autre ;
les parties (2, 3) du cadre (1) et le système de maintien mécanique sont structurés et disposés de manière à pouvoir maintenir, selon une direction (Y) sensiblement orthogonale au plan moyen (XZ) de l'élément (4), plusieurs positions relatives des parties (2, 3) du cadre (1) l'une par rapport à l'autre,
**caractérisé en ce que** le sytème de maintien mécanique est un dispositif de serrage dont l'axe de serrage (s) est sensiblement orthogonal à l'axe de compression (Y) du ou des joints (7, 8) élastiques.

2. Dispositif selon la revendication 1, **caractérisé en ce que** les différentes positions relatives couvrent au moins un intervalle continu.

3. Dispositif selon l'une quelconque des revendications précédentes, **caractérisé en ce que** le dispositif est un dispositif de visualisation et **en ce que** l'élément (4) sensiblement plat est une cellule d'affichage sensiblement plate.

4. Dispositif selon la revendication 3, **caractérisé en ce que** la cellule d'affichage (4) sensiblement plate est un écran à cristaux liquides.

5. Dispositif selon l'une quelconque des revendications précédentes, **caractérisé en ce que** les parties (2, 3) du cadre (1) présentent entre elles, en position maintenue, au moins une surface de contact (SC) sensiblement orthogonale au plan moyen (XZ) de l'élément (4).

6. Dispositif selon l'une quelconque des revendications précédentes, **caractérisé en ce que** le système de maintien mécanique est un dispositif de serrage comprenant au moins une vis (12) coulissant dans un trou oblong (11).

7. Dispositif selon la revendication 6, **caractérisé en ce que** le dispositif de serrage comporte une rondelle (13) disposée entre la vis (12) et le trou oblong (11), la rondelle (13) étant suffisamment grande pour augmenter la surface d'appui de la vis (12) sur le trou oblong (11).

8. Dispositif selon l'une quelconque des revendications 6 à 7, **caractérisé en ce que** le trou oblong (11) est situé dans un renfoncement (14) qui est situé dans une surface extérieure (10) du cadre (1) et qui est disposé vers l'intérieur du dispositif.

9. Dispositif selon l'une quelconque des revendications précédentes, **caractérisé en ce que** les deux parties (2, 3) du cadre (1) présentent chacune une surface (S2, S3) en regard de l'autre partie, chacune desdites surfaces (S2, S3) ayant un profil en escalier.

10. Dispositif selon l'une quelconque des revendications précédentes, **caractérisé en ce que** le joint (7, 8) est un joint plat, la largeur (1) du joint plat (7, 8) valant au moins le double de l'épaisseur (e) du joint plat (7,8).

11. Dispositif selon la revendication 10, **caractérisé en ce que** la largeur (l) du joint plat (7, 8) vaut sensiblement le triple de l'épaisseur (e) du joint plat (7, 8).

12. Dispositif selon l'une quelconque des revendications précédentes, **caractérisé en ce que** le joint (7, 8) est en silicone.

13. Dispositif selon l'une quelconque des revendications précédentes, **caractérisé en ce qu'**au moins un joint (7, 8) se trouve entre l'élément (4) et chaque partie (2, 3) du cadre (1).

14. Dispositif selon l'une quelconque des revendications 1 à 12, **caractérisé en ce que**, entre l'élément (4) et la première partie (2) du cadre (1) se trouve au moins un joint (7), entre l'élément (4) et la deuxième partie (3) du cadre (1) se trouve un film plastique.

15. Dispositif selon l'une quelconque des revendications précédentes, **caractérisé en ce que** le système de maintien mécanique est démontable.

16. Procédé de montage d'un dispositif selon l'une quelconque des revendications précédentes, **caractérisé en ce que** le procédé comporte une étape de pincement de l'élément (4) par compression du ou des joints (7, 8) par l'intermédiaire de l'application d'un effort nominal jusqu'à ce que l'effort nominal soit équilibré par le contre-effort fourni par le ou les joints (7, 8) comprimés.

17. Procédé de montage selon la revendication 16, **caractérisé en ce que** le mouvement relatif des parties (2, 3) du cadre (1) l'une par rapport à l'autre s'effectue par coulissement le long d'une surface de contact (SC) entre les parties (2, 3) du cadre (1), la surface de contact (SC) étant sensiblement orthogonale au plan moyen (XZ) de l'élément (4) sensiblement plat.

18. Procédé de montage selon l'une quelconque des revendications 16 à 17, **caractérisé en ce que**, lors de l'application de l'effort nominal, les parties (2, 3) du cadre (1) qui se rapprochent ne viennent pas buter l'une contre l'autre selon une surface de contact parallèle au plan moyen (XZ) de l'élément (4) sensiblement plat.

19. Console d'aéronef **caractérisée en ce qu'**elle comporte au moins un dispositif de visualisation selon l'une quelconque des revendications 3 à 15 ou au moins un dispositif de visualisation monté par le procédé de montage selon l'une quelconque des revendications 16 à 18.

## Claims

1. Device comprising at least:
- one appreciably flat element (4);
- one surround (1) intended to receive the element (4), the surround (1) comprising two parts (2, 3) intended to trap a portion of the element (4) between them in a direction (Y) roughly orthogonal to the mean plane (XZ) of the element (4) via at least one elastic gasket (7, 8);
- one mechanical system (11,12) for holding the relative position of the parts (2, 3) of the surround (1), one with respect to the other;
the parts (2, 3) of the surround (1) and the mechanical holding system being structured and arranged in such a way as to be able to hold several relative positions of the parts (2, 3) of the surround (1), one with respect to the other, in a direction (Y) roughly orthogonal to the mean plane (XZ) of the element (4),
**characterized in that** the mechanical holding system is a clamping device, the axis of clamping (s) of which is roughly orthogonal to the axis of compression (Y) of the elastic gasket or gaskets (7, 8).

2. Device according to Claim 1, **characterized in that** the various relative positions cover at least one continuous range.

3. Device according to either of the preceding claims, **characterized in that** the device is a display device and **in that** the appreciably flat element (4) is an appreciably flat display cell.

4. Device according to Claim 3, **characterized in that** the appreciably flat display cell (4) is a liquid crystal screen.

5. Device according to any one of the preceding claims, **characterized in that** the parts (2, 3) of the surround (1) together, in the held position, exhibit at least one contact surface (SC) roughly orthogonal to the mean plane (XZ) of the element (4).

6. Device according to any one of the preceding claims, **characterized in that** the mechanical holding system is a clamping device comprising at least one screw (12) sliding in an oblong hole (11).

7. Device according to Claim 6, **characterized in that** the clamping device comprises a washer (13) arranged between the screw (12) and the oblong hole (11), the washer (13) being large enough to increase the area over which the screw (12) bears against the oblong hole (11).

8. Device according to either of Claims 6 and 7, **characterized in that** the oblong hole (11) lies in a depression (14) which is located in an outer surface (10) of the surround (1) and which is arranged toward the inside of the device.

9. Device according to any one of the preceding claims, **characterized in that** the two parts (2, 3) of the surround (1) each have a surface (S2, S3) facing the other part, each of said surfaces (S2, S3) having a stepped profile.

10. Device according to any one of the preceding claims, **characterized in that** the gasket (7, 8) is a flat gasket, the width (1) of the flat gasket (7, 8) being at least twice the thickness (e) of the flat gasket (7, 8).

11. Device according to Claim 10, **characterized in that** the width (1) of the flat gasket (7, 8) is roughly three times the thickness (e) of the flat gasket (7, 8).

12. Device according to any one of the preceding claims, **characterized in that** the gasket (7, 8) is made of silicone.

13. Device according to any one of the preceding claims, **characterized in that** there is at least one gasket (7, 8) between the element (4) and each part (2, 3) of the surround (1).

14. Device according to any one of Claims 1 to 12, **characterized in that** there is at least one gasket (7) between the element (4) and the first part (2) of the surround (1) and there is a plastic film between the element (4) and the second part (3) of the surround (1).

15. Device according to any one of the preceding claims, **characterized in that** the mechanical holding system is demountable.

16. Method for mounting a device according to any one of the preceding claims, **characterized in that** the method involves a step of trapping the element (4) by compression of the gasket or gaskets (7, 8) by applying a nominal force until the nominal force is balanced by the opposing force supplied by the compressed gasket or gaskets (7, 8).

17. Mounting method according to Claim 16, **characterized in that** the relative movement of the parts (2, 3) of the surround (1) one with respect to the other is in sliding along a contact surface (SC) for contact between the parts (2, 3) of the surround (1), the contact surface (SC) being roughly orthogonal to the mean plane (XZ) of the appreciably flat element (4).

18. Mounting method according to either one of Claims 16 to 17, **characterized in that** when the nominal force is being applied, the parts (2, 3) of the surround (1) which come closer together do not butt against each other along a contact surface parallel to the mean plane (XZ) of the appreciably flat element (4).

19. Aircraft console **characterized in that** it comprises at least one display device according to any one of Claims 3 to 15, or at least one display device mounted using the mounting method according to any one of Claims 16 to 18.

## Patentansprüche

1. Vorrichtung, umfassend mindestens:
- ein im Wesentlichen flaches Element (4);
- einen Rahmen (1), der dazu bestimmt ist, das Element (4) aufzunehmen, wobei der Rahmen (1) zweite Teile (2, 3) umfasst, die dazu bestimmt sind, zwischen sich in eine Richtung (Y) im Wesentlichen orthogonal zur Mittelebene (XZ) des Elements (4) mit Hilfe mindestens einer elastischen Dichtung (7, 8) einen Abschnitt des Elements (4) einzuklemmen;
- ein mechanisches System (11, 12) zum Halten der relativen Position der Teile (2, 3) des Rahmens (1) zueinander;
wobei die Teile (2, 3) des Rahmens (1) und das mechanische Haltesystem derart strukturiert und angeordnet sind, dass sie in eine Richtung (Y) im Wesentlichen orthogonal zur Mittelebene (XZ) des Elements (4) mehrere relative Positionen (2, 3) des Rahmens (1) zueinander halten können,
**dadurch gekennzeichnet, dass** das mechanische Haltesystem eine Klemmvorrichtung ist, deren Klemmachse (s) im Wesentlichen zur Kompressionsachse (Y) der elastischen Dichtung(en) (7, 8) orthogonal ist.

2. Vorrichtung nach Anspruch 1, **dadurch gekennzeichnet, dass** die verschiedenen relativen Positionen zumindest einen durchgehenden Zwischenraum abdecken.

3. Vorrichtung nach einem der vorhergehenden Ansprüche, **dadurch gekennzeichnet, dass** die Vorrichtung eine Anzeigevorrichtung ist, und dass das im Wesentlichen flache Element (4) eine im Wesentlichen flache Anzeigezelle ist.

4. Vorrichtung nach Anspruch 3, **dadurch gekennzeichnet, dass** die im Wesentlichen flache Anzeigezelle (4) ein Flüssigkristallbildschirm ist.

5. Vorrichtung nach einem der vorhergehenden Ansprüche, **dadurch gekennzeichnet, dass** die Teile (2, 3) des Rahmens (1) untereinander in der gehaltenen Position mindestens eine Kontaktfläche (SC) im Wesentlichen orthogonal zur Mittelebene (XZ) des Elements (4) aufweisen.

6. Vorrichtung nach einem der vorhergehenden Ansprüche, **dadurch gekennzeichnet, dass** das mechanische Haltesystem eine Klemmvorrichtung ist, umfassend mindestens eine Schraube (12), die in einem Langloch (11) gleitet.

7. Vorrichtung nach Anspruch 6, **dadurch gekennzeichnet, dass** die Klemmvorrichtung eine Scheibe (13) aufweist, die zwischen der Schraube (12) und dem Langloch (11) angeordnet ist, wobei die Scheibe (13) groß genug ist, um die Stützfläche der Schraube (12) auf dem Langloch (11) zu vergrößern.

8. Vorrichtung nach einem der Ansprüche 6 bis 7, **dadurch gekennzeichnet, dass** das Langloch (11) in einer Verstärkung (14) angeordnet ist, die sich in einer Außenfläche (10) des Rahmens (1) befindet und zum Inneren der Vorrichtung angeordnet ist.

9. Vorrichtung nach einem der vorhergehenden Ansprüche, **dadurch gekennzeichnet, dass** die beiden Teile (2, 3) des Rahmens (1) jeweils eine dem anderen Teil gegenüber liegende Fläche (S2, S3) aufweisen, wobei jede dieser Flächen (S2, S3) ein stufenförmiges Profil hat.

10. Vorrichtung nach einem der vorhergehenden Ansprüche, **dadurch gekennzeichnet, dass** die Dichtung (7, 8) eine Flachdichtung ist, wobei die Breite (1) der Flachdichtung (7, 8) mindestens das Doppelte der Dicke (e) der Flachdichtung (7, 8) beträgt.

11. Vorrichtung nach Anspruch 10, **dadurch gekennzeichnet, dass** die Breite (1) der Flachdichtung (7, 8) im Wesentlichen das Dreifache der Dicke (e) der Flachdichtung (7, 8) beträgt.

12. Vorrichtung nach einem der vorhergehenden Ansprüche, **dadurch gekennzeichnet, dass** die Dichtung (7, 8) aus Silikon ist.

13. Vorrichtung nach einem der vorhergehenden Ansprüche, **dadurch gekennzeichnet, dass** mindestens eine Dichtung (7, 8) zwischen dem Element (4) und jedem Teil (2, 3) des Rahmens (1) vorgesehen ist.

14. Vorrichtung nach einem der Ansprüche 1 bis 12, **dadurch gekennzeichnet, dass** zwischen dem Element (4) und dem ersten Teil (2) des Rahmens (1) mindestens eine Dichtung (7) und zwischen dem Element (4) und dem zweiten Teil (3) des Rahmens (1) eine Kunststofffolie angeordnet ist.

15. Vorrichtung nach einem der vorhergehenden Ansprüche, **dadurch gekennzeichnet, dass** das mechanische Haltesystem demontierbar ist.

16. Verfahren zur Montage einer Vorrichtung nach einem der vorhergehenden Ansprüche, **dadurch gekennzeichnet, dass** das Verfahren einen Schritt des Einklemmens des Elements (4) durch Zusammendrücken der Dichtung(en) (7, 8) durch Anlegen einer Nominalkraft umfasst, bis die Nominalkraft durch die von der oder den zusammengedrückten Dichtung(en) (7, 8) gelieferten Gegenkraft ausgeglichen wird.

17. Montageverfahren nach Anspruch 16, **dadurch gekennzeichnet, dass** die relative Bewegung der Teile (2, 3) des Rahmens (1) zueinander durch Gleiten entlang einer Kontaktfläche (SC) zwischen den Teilen (2, 3) des Rahmens (1) erfolgt, wobei die Kontaktfläche (SC) im Wesentlichen orthogonal zur Mittelebene (XZ) des im Wesentlichen flachen Elements (4) ist.

18. Montageverfahren nach einem der Ansprüche 16 bis 17, **dadurch gekennzeichnet, dass** beim Anlegen der Nominalkraft die Teile (2, 3) des Rahmens (1), die sich annähern, nicht entlang einer Kontaktfläche parallel zur Mittelebene (XZ) des im Wesentlichen flachen Elements (4) aneinander anschlagen.

19. Konsole eines Luftfahrzeugs, **dadurch gekennzeichnet, dass** sie mindestens eine Anzeigevorrichtung nach einem der Ansprüche 13 bis 15 oder mindestens eine Anzeigevorrichtung, die durch das Montageverfahren nach einem der Ansprüche 16 bis 18 montiert ist, umfasst.
